# EUROPÄISCHE PATENTSCHRIFT

(11) **EP 2 936 926 B1**
(45) Veröffentlichungstag und Bekanntmachung des Hinweises auf die Patenterteilung: **16.01.2019**
(21) Anmeldenummer: 13786505.1
(22) Anmeldetag: 07.11.2013
(51) Int. Cl.: H05B 3/84

(54) **SCHEIBE MIT ELEKTRISCHER HEIZSCHICHT**
GLASSPANE WITH ELECTRICAL HEATING LAYER
VITRE AVEC COUCHE CHAUFFANTE ÉLECTRIQUE

(30) Priorität: 20.12.2012 EP 12198371
(43) Veröffentlichungstag der Anmeldung: 28.10.2015
(73) Patentinhaber: Saint-Gobain Glass France, 92400 Courbevoie (FR)
(72) Erfinder: PHAN, Dang Cuong, 52062 Aachen (DE); DIMITRIJEVIC, Bojan, Bochum 44803 (DE); SCHALL, Günther, Kreuzau 52372 (DE)
(74) Vertreter: Gebauer, Dieter Edmund
(86) Internationale Anmeldenummer: PCT/EP2013/073231
(87) Internationale Veröffentlichungsnummer: WO 2014/095153

(56) Entgegenhaltungen:
- WO-A2-03/015473
- DE-A1- 3 644 297
- GB-A- 2 381 179
- US-A1- 2004 065 651
- US-A1- 2004 200 821

## Beschreibung

Die Erfindung betrifft eine Scheibe mit elektrischer Heizschicht, ein Verfahren zu deren Herstellung und deren Verwendung.

Das Sichtfeld einer Fahrzeugscheibe, insbesondere einer Windschutzscheibe muss frei von Eis und Beschlag gehalten werden. Bei Kraftfahrzeugen mit Verbrennungsmotor kann beispielsweise ein mittels Motorwärme erwärmter Luftstrom auf die Scheiben gelenkt werden.

Alternativ kann die Scheibe eine elektrische Heizfunktion aufweisen. So sind Verbundscheiben bekannt, die auf einer innenseitigen Oberfläche einer der Einzelscheiben eine elektrische Heizschicht aus einer transparenten, elektrisch leitfähigen Beschichtung aufweisen. Durch eine externe Spannungsquelle kann ein elektrischer Strom durch die elektrisch leitfähige Beschichtung geleitet werden, der die Beschichtung und damit die Scheibe erwärmt. WO2012/052315 A1 offenbart beispielsweise eine solche beheizbare, elektrisch leitfähige Beschichtung auf Metallbasis.

Die elektrische Kontaktierung der elektrischen Heizschicht erfolgt typischerweise über Sammelleiter, wie aus US 2007/0020465 A1 bekannt ist. Die Sammelleiter bestehen beispielsweise aus einer aufgedruckten und eingebrannten Silberpaste. Die Sammelleiter verlaufen typischerweise entlang der oberen und unteren Kante der Scheibe. Die Sammelleiter sammeln den Strom, der durch die elektrische Heizschicht fließt und leiten ihn zu externen Zuleitungen, die mit einer Spannungsquelle verbunden sind.

Aus der industriellen Serienfertigung von Scheiben mit elektrischer Heizschicht ist die Strukturierung der Heizschicht durch Trennlinien oder Trennzonen zur Formung eines in der Regel gewundenen Strompfads bekannt. Dies hat den Vorteil, dass der elektrische Widerstand erhöht und der Strompfad durch relativ kleine Anschlusselektroden kontaktiert werden kann. In der Patentliteratur ist eine solche beheizbare Scheibe beispielsweise in der DE 19860870 A1 beschrieben.

Scheiben mit einer elektrischen Heizschicht schirmen elektromagnetische Strahlung relativ stark ab, so dass insbesondere in Kraftfahrzeugen mit einer heizbaren Windschutzscheibe der Funkdatenverkehr erheblich beeinträchtigt sein kann. Heizbare Windschutzscheiben werden deshalb häufig mit unbeschichteten oder beschichtungsfreien Zonen ("Kommunikationsfenster") versehen, welche zumindest für bestimmte Bereiche des elektromagnetischen Spektrums gut durchlässig sind. Auf diese Weise wird ein reibungsloser Datenverkehr ermöglicht. Die unbeschichteten Zonen, an denen sich oft elektronische Einrichtungen, wie Sensoren, Kameras und dergleichen befinden, sind oft in der Nähe des oberen Scheibenrands angeordnet, wo sie vom oberen Maskierungsstreifen gut verdeckt werden können.

Jedoch beeinträchtigen unbeschichtete Zonen die elektrischen Eigenschaften der Heizschicht, was sich zumindest lokal auf die Stromdichteverteilung des durch die Heizschicht fließenden Heizstroms auswirkt. Tatsächlich verursachen sie eine stark inhomogene Heizleistungsverteilung, wobei die Heizleistung unterhalb und in der Umgebung der unbeschichteten Zonen deutlich verringert ist. Andererseits treten Stellen mit einer besonders hohen Stromdichte auf, in denen die Heizleistung stark erhöht ist. In der Folge können sehr hohe lokale Scheibentemperaturen auftreten, welche eine Gefahr für Verbrennungen darstellen und den Scheiben große thermische Spannungen auferlegen. Zudem können sich dadurch Klebstellen von Anbauteilen lösen.

Die Patentanmeldung US 2004/065651 A1 zeigt eine Scheibe mit einem Kommunikationsfenster, der durch Trennlinien eine Mehrzahl von Segmenten in einer Heizschicht ausgebildet ist. Die Segmente sind um das Kommunikationsfenster geführt und haben im Bereich des Kommunikationsfensters eine voneinander verschiedene Breite, um einen verschiedenen elektrischen Widerstand der Strompfade in den Segmenten zu erreichen.

Die Aufgabe der vorliegenden Erfindung besteht darin, eine verbesserte Scheibe mit unbeschichteter Zone und zumindest annähernd gleichmäßiger Heizleistungsverteilung bereitzustellen, die einfach und kostengünstig herzustellen ist.

Die Aufgabe der vorliegenden Erfindung wird erfindungsgemäß durch eine Scheibe mit elektrischer Heizschicht gemäß Anspruch 1 gelöst. Bevorzugte Ausführungen gehen aus den Unteransprüchen hervor.

Die erfindungsgemäße Scheibe mit elektrischer Heizschicht umfasst zumindest die folgenden Merkmale:
- eine erste Scheibe mit einer Oberfläche,
- mindestens eine elektrische Heizschicht aus einem elektrisch leitfähigen Material zum Heizen der ersten Scheibe, wobei die elektrische Heizschicht auf mindestens einem Teil der Oberfläche angeordnet ist und mindestens eine unbeschichtete Zone umfasst,
- mindestens zwei zum Anschluss an eine Spannungsquelle vorgesehene

Sammelleiter, die mit der elektrischen Heizschicht so verbunden sind, dass zwischen den Sammelleitern ein Strompfad für einen Heizstrom geformt ist und - n Trennlinien, die die elektrische Heizschicht in m Segmente elektrisch unterteilen, wobei n eine Zahl ≥ 1ist und m = n+1 gilt,
wobei die Segmente streifenförmig so um die unbeschichtete Zone angeordnet sind, dass der Strompfad für den Heizstrom zumindest teilweise um die unbeschichtete Zone geführt ist und die Breite b der Segmente gleich ist und die Summe der Breiten b der Segmente gleich der Breite B der elektrischen Heizschicht ist.

Dies bedeutet, dass die Segmente zumindest teilweise streifenförmig um die unbeschichtete Zone herum angeordnet sind, so dass der Strompfad für den Heizstrom zumindest teilweise um die unbeschichtete Zone herum geführt ist und die Breite b jedes Segments gleich dem m-ten Teil der Breite B der elektrischen Heizschicht entlang einer Linie parallel zu den Sammelleitern ist.

Die Sammelleiter sind bevorzugt parallel oder annähernd parallel zueinander angeordnet, da dies zu einer homogenen Stromdichteverteilung über die elektrische Heizschicht führt. Sind die Sammelleiter nicht parallel zueinander angeordnet, beispielsweise um einen bestimmten Bereich der elektrischen Heizschicht stärker zu heizen, so ist die Linie zur Bestimmung der Breite der elektrischen Heizschicht entlang einer Äquipotentiallinie einer elektrischen Heizschicht ohne unbeschichtete Zone zu verstehen.

Die elektrische Heizschicht umfasst mindestens eine unbeschichtete Zone. Dies bedeutet, dass die unbeschichtete Zone vollständig oder teilweise von der elektrischen Heizschicht umgeben ist. Die unbeschichtete Zone kann insbesondere an einen Randbereich der elektrischen Heizschicht grenzen oder über einen unbeschichteten Streifen zum Randbereich der elektrischen Heizschicht hin erweitert sein.

Die Breite b der Segmente ist abhängig von der Breite B der elektrischen Heizschicht in einer jeweiligen Linie parallel zu den Sammelleitern. Die Breite b der Segmente ergibt sich durch Division der Breite B der elektrischen Heizschicht durch die Anzahl der Segmente. Weist die elektrische Heizschicht einen oder mehrere unbeschichteten Zonen auf, so wird die Breite B der elektrischen Heizschicht ohne die Breite der unbeschichteten Zone ermittelt.

In einer vorteilhaften Ausgestaltung der Erfindung kann die Breite b der einzelnen Segmente bis zu 10 % voneinander, das heißt vom Quotienten der Breite der Heizschicht B durch die Anzahl der Segmente, abweichen. Bevorzugt beträgt die Abweichung ≤ 5 %, besonders bevorzugt ≤ 2 %.

Erfindungsgemäß wird die elektrische Heizschicht durch Trennlinien in einzelne Segmente unterteilt, die jeweils den Strompfad des Heizstroms um die unbeschichtete Zone herumführen. Dabei wird der Heizstrom insbesondere auch in die Bereiche oberhalb und unterhalb der unbeschichteten Zone geführt. Unterhalb und oberhalb bedeutet hier hinsichtlich der Richtung der kürzesten Verbindungslinien zwischen den Sammelleitern einer Scheibe ohne unbeschichteter Zone.

Die Homogenität der Heizleistungsverteilung steigt mit der Anzahl der Trennlinien und der einzelnen Segmente, die den Heizstrom führen. In einer vorteilhaften Ausgestaltung weist die die elektrische Heizschicht mindestens n = 3 Trennlinien und bevorzugt n = 7 bis 25 Trennlinien auf. Die Trennlinien bilden bevorzugt Segmente, die zumindest teilweise streifenförmig um die unbeschichtete Zone herum angeordnet sind. Erfindungsgemäße Scheiben mit einer Trennlinienanzahl von 7 bis 25 Linien zeigen eine besonders gute Homogenität in der Heizleistungsverteilung bei gleichzeitig wirtschaftlichem Kostenaufwand und Zeitaufwand durch das Einbringen der Trennlinien.

In einer weiteren vorteilhaften Ausgestaltung der erfindungsgemäßen Scheibe beträgt die Breite d der Trennlinie von 30 µm bis 200 µm und bevorzugt von 70 µm bis 140 µm. Dies hat den besonderen Vorteil, dass Trennlinien mit einer derart geringen Breite die Durchsicht durch die Scheibe nicht oder nur sehr geringfügig beeinträchtigen.

In einer weiteren vorteilhaften Ausgestaltung der erfindungsgemäßen Scheibe beträgt die Fläche der unbeschichteten Zone von 0,5 dm² bis 15 dm² und bevorzugt von 2 dm² bis 8 dm². Scheiben nach dem Stand der Technik ohne erfindungsgemäße Trennlinien und mit derart großen unbeschichteten Zonen zeigen besonders inhomogene Heizleistungsverteilungen und sind bei schlechten Witterungsverhältnissen nur unzureichend von Eis, Schnee und Beschlag zu befreien. Durch den Einsatz der erfindungsgemäßen Trennlinien lässt sich bei einer derart großen unbeschichteten Zone eine besonders hohe Verbesserung der Heizeigenschaften der Scheibe erzielen. Die Sammelleiter sind bevorzugt entlang der Seitenkante auf der elektrisch leitfähigen Beschichtung der elektrischen Heizschicht angeordnet. Die Länge des Sammelleiters ist typischerweise im Wesentlichen gleich der Länge der Seitenkante der elektrisch leitfähigen Beschichtung, kann aber auch leicht größer oder kleiner sein. Es können auch mehr als zwei Sammelleiter auf der elektrisch leitfähigen Beschichtung angeordnet sein, bevorzugt im Randbereich entlang zweier gegenüberliegenden Seitenkanten der elektrisch leitfähigen Beschichtung. Es können auch mehr als zwei Sammelleiter auf der elektrischen Heizschicht angeordnet sein, beispielsweise um zwei oder mehrere unabhängige Heizfelder in einer elektrisch beheizbaren Beschichtung auszubilden oder wenn der Sammelleiter durch eine oder mehrere unbeschichtete Zonen unterbrochen oder versetzt ist. Die erfindungsgemäße Lehre gilt dann für mindestens eines und bevorzugt für jedes der unabhängigen Heizfelder.

In einer vorteilhaften Ausgestaltung ist der erfindungsgemäße Sammelleiter als aufgedruckte und eingebrannte leitfähige Struktur ausgebildet. Der aufgedruckte Sammelleiter enthält bevorzugt zumindest ein Metall, eine Metalllegierung, eine Metallverbindung und/oder Kohlenstoff, besonders bevorzugt ein Edelmetall und insbesondere Silber. Die Druckpaste enthält bevorzugt metallische Partikel Metallpartikel und/oder Kohlenstoff und insbesondere Edelmetallpartikel wie Silberpartikel. Die elektrische Leitfähigkeit wird bevorzugt durch die elektrisch leitenden Partikel erzielt. Die Partikel können sich in einer organischen und / oder anorganischen Matrix wie Pasten oder Tinten befinden, bevorzugt als Druckpaste mit Glasfritten.

Die Breite des ersten und zweiten Sammelleiters beträgt bevorzugt von 2 mm bis 30 mm, besonders bevorzugt von 4 mm bis 20 mm und insbesondere von 10 mm bis 20 mm. Dünnere Sammelleiter führen zu einen zu hohen elektrischen Widerstand und damit zu einer zu hohen Erwärmung des Sammelleiters im Betrieb. Des Weiteren sind dünnere Sammelleiter nur schwer durch Drucktechniken wie Siebdruck herzustellen. Dickere Sammelleiter erfordern einen unerwünscht hohen Materialeinsatz. Des Weiteren führen sie zu einer zu großen und unästhetischen Einschränkung des Durchsichtbereichs der Scheibe. Die Länge des Sammelleiters richtet sich nach der Ausdehnung der elektrischen Heizschicht. Bei einem Sammelleiter, der typischerweise in Form eines Streifens ausgebildet ist, wird die längere seiner Dimensionen als Länge und die weniger lange seiner Dimensionen als Breite bezeichnet. Die dritten oder zusätzlichen Sammelleiter können auch dünner ausgestaltet sein, bevorzugt von 0,6 mm bis 5 mm.

Die Schichtdicke des aufgedruckten Sammelleiters beträgt bevorzugt von 5 µm bis 40 µm, besonders bevorzugt von 8 µm bis 20 µm und ganz besonders bevorzugt von 8 µm bis 12 µm. Aufgedruckte Sammelleiter mit diesen Dicken sind technisch einfach zu realisieren und weisen eine vorteilhafte Stromtragfähigkeit auf.

Der spezifische Widerstand ρₐ der Sammelleiter beträgt bevorzugt von 0.8 µOhm•cm bis 7.0 µOhm•cm und besonders bevorzugt von 1.0 µOhm•cm bis 2.5 µOhm•cm. Sammelleiter mit spezifischen Widerständen in diesem Bereich sind technisch einfach zu realisieren und weisen eine vorteilhafte Stromtragfähigkeit auf.

Alternativ kann der Sammelleiter aber auch als Streifen einer elektrisch leitfähigen Folie ausgebildet sein. Der Sammelleiter enthält dann beispielsweise zumindest Aluminium, Kupfer, verzinntes Kupfer, Gold, Silber, Zink, Wolfram und/oder Zinn oder Legierungen davon. Der Streifen hat bevorzugt eine Dicke von 10 µm bis 500 µm, besonders bevorzugt von 30 µm bis 300 µm. Sammelleiter aus elektrisch leitfähigen Folien mit diesen Dicken sind technisch einfach zu realisieren und weisen eine vorteilhafte Stromtragfähigkeit auf. Der Streifen kann mit der elektrisch leitfähigen Struktur beispielsweise über eine Lotmasse, über einen elektrisch leitfähigen Kleber oder durch direktes Auflegen elektrisch leitend verbunden sein.

Die erfindungsgemäße Scheibe umfasst eine erste Scheibe, auf der eine elektrische Heizschicht angeordnet ist. Je nach Art der elektrischen Heizschicht ist es vorteilhaft die Heizschicht mit einer Schutzschicht, beispielsweise einem Lack, einer Polymerfolie und/oder einer zweiten Scheibe zu schützen.

In einer vorteilhaften Ausgestaltung der erfindungsgemäßen Scheibe ist die Oberfläche der ersten Scheibe, auf der die elektrisch leitfähige Beschichtung angeordnet ist, über eine thermoplastische Zwischenschicht mit einer zweiten Scheibe flächig verbunden ist

Als erste und gegebenenfalls zweite Scheibe sind im Grunde alle elektrisch isolierenden Substrate geeignet, die unter den Bedingungen der Herstellung und der Verwendung der erfindungsgemäßen Scheibe thermisch und chemisch stabil sowie dimensionsstabil sind.

Die erste Scheibe und/oder die zweite Scheibe enthalten bevorzugt Glas, besonders bevorzugt Flachglas, Floatglas, Quarzglas, Borosilikatglas, Kalk-Natron-Glas, oder klare Kunststoffe, vorzugsweise starre klare Kunststoffe, insbesondere Polyethylen, Polypropylen, Polycarbonat, Polymethylmethacrylat, Polystyrol, Polyamid, Polyester, Polyvinylchlorid und/oder Gemische davon. Die erste Scheibe und/oder die zweite Scheibe sind bevorzugt transparent, insbesondere für die Verwendung der Scheibe als Windschutzscheide oder Rückscheibe eines Fahrzeugs oder anderen Verwendungen bei denen eine hohe Lichttransmission erwünscht ist. Als transparent im Sinne der Erfindung wird dann eine Scheibe verstanden, die eine Transmission im sichtbaren Spektralbereich von größer 70 % aufweist. Für Scheiben, die nicht im verkehrrelevanten Sichtfeld des Fahrers liegen, beispielsweise für Dachscheiben, kann die Transmission aber auch viel geringer sein, beispielsweise größer als 5 %.

Die Dicke der Scheibe kann breit variieren und so hervorragend den Erfordernissen des Einzelfalls angepasst werden. Vorzugsweise werden Scheiben mit den Standardstärken von 1,0 mm bis 25 mm, bevorzugt von 1,4 mm bis 2,5 mm für Fahrzeugglas und bevorzugt von 4 mm bis 25 mm für Möbel, Geräte und Gebäude, insbesondere für elektrische Heizkörper, verwendet. Die Größe der Scheibe kann breit variieren und richtet sich nach der Größe der erfindungsgemäßen Verwendung. Die erste Scheibe und gegebenenfalls die zweite Scheibe weisen beispielsweise im Fahrzeugbau und Architekturbereich übliche Flächen von 200 cm² bis zu 20 m² auf.

Die Scheibe kann eine beliebige dreidimensionale Form aufweisen. Vorzugsweise hat die dreidimensionale Form keine Schattenzonen, so dass sie beispielsweise durch Kathodenzerstäubung beschichtet werden kann. Bevorzugt sind die Substrate planar oder leicht oder stark in einer Richtung oder in mehreren Richtungen des Raumes gebogen. Insbesondere werden planare Substrate verwendet. Die Scheiben können farblos oder gefärbt sein.

Mehrere Scheiben werden durch mindestens eine Zwischenschicht miteinander verbunden. Die Zwischenschicht enthält vorzugsweise mindestens einen thermoplastischen Kunststoff, bevorzugt Polyvinylbutyral (PVB), Ethylenvinylacetat (EVA) und / oder Polyethylenterephthalat (PET). Die thermoplastische Zwischenschicht kann aber auch beispielsweise Polyurethan (PU), Polypropylen (PP), Polyacrylat, Polyethylen (PE), Polycarbonat (PC), Polymethylmetacrylat, Polyvinylchlorid, Polyacetatharz, Gießharze, Acrylate, fluorinierte Ethylen-Propylene, Polyvinylfluorid und/oder Ethylen-Tetrafluorethylen, oder Copolymere oder Gemische davon enthalten. Die thermoplastische Zwischenschicht kann durch eine oder auch durch mehrere übereinander angeordnete thermoplastische Folien ausgebildet werden, wobei die Dicke ein thermoplastischen Folie bevorzugt von 0,25 mm bis 1 mm beträgt, typischerweise 0,38 mm oder 0,76 mm.

Bei einer erfindungsgemäßen Verbundscheibe aus einer ersten Scheibe, einer Zwischenschicht und einer zweiten Scheibe kann die elektrisch Heizschicht direkt auf die erste Scheibe aufgebracht sein oder auf eine Trägerfolie oder auf die Zwischenschicht selbst aufgebracht sein. Die erste Scheibe und die zweite Scheibe weisen jeweils eine innenseitige Oberfläche und eine außenseitige Oberfläche auf. Die innenseitigen Oberflächen der ersten und der zweiten Scheibe sind einander zugewandt und über die thermoplastische Zwischenschicht miteinander verbunden. Die außenseitigen Oberflächen der ersten und der zweiten Scheibe sind voneinander und von der thermoplastischen Zwischenschicht abgewandt. Die elektrische Heizschicht ist vorzugsweise auf der innenseitigen Oberfläche der ersten Scheibe aufgebracht. Natürlich kann auch auf der innenseitigen Oberfläche der zweiten Scheibe eine weitere elektrisch leitfähige Beschichtung aufgebracht sein. Auch die außenseitigen Oberflächen der Scheiben können Beschichtungen aufweisen. Die Begriffe "erste Scheibe" und "zweiten Scheibe" sind zur Unterscheidung der beiden Scheiben bei einer erfindungsgemäßen Verbundscheibe gewählt. Mit den Begriffen ist keine Aussage über die geometrische Anordnung verbunden. Ist die erfindungsgemäße Scheibe beispielsweise dafür vorgesehen, in einer Öffnung, beispielsweise eines Fahrzeugs oder eines Gebäudes, den Innenraum gegenüber der äußeren Umgebung abzutrennen, so kann die ersten Scheibe dem Innenraum oder der äußeren Umgebung zugewandt sein.

Die elektrische Heizschicht enthält elektrisch leitfähige Beschichtung und bevorzugt eine transparente, elektrisch leitfähige Beschichtung. Transparent bedeutet hier durchlässig für elektromagnetische Strahlung, vorzugsweise elektromagnetische Strahlung einer Wellenlänge von 300 nm bis 1.300 nm und insbesondere für sichtbares Licht.

Erfindungsgemäße elektrisch leitfähige Beschichtungen sind beispielsweise aus DE 20 2008 017 611 U1, EP 0 847 965 B1 oder WO2012/052315 A1 bekannt. Sie enthalten typischerweise eine oder mehrere, beispielsweise zwei, drei oder vier elektrisch leitfähige, funktionelle Schichten. Die funktionellen Schichten enthalten bevorzugt zumindest ein Metall, beispielsweise Silber, Gold, Kupfer, Nickel und oder Chrom, oder eine Metalllegierung. Die funktionellen Schichten enthalten besonders bevorzugt mindestens 90 Gew. % des Metalls, insbesondere mindestens 99,9 Gew. % des Metalls. Die funktionellen Schichten können aus dem Metall oder der Metalllegierung bestehen. Die funktionellen Schichten enthalten besonders bevorzugt Silber oder eine silberhaltige Legierung. Solche funktionelle Schichten weisen eine besonders vorteilhafte elektrische Leitfähigkeit bei gleichzeitiger hoher Transmission im sichtbaren Spektralbereich auf. Die Dicke einer funktionellen Schicht beträgt bevorzugt von 5 nm bis 50 nm, besonders bevorzugt von 8 nm bis 25 nm. In diesem Bereich für die Dicke der funktionellen Schicht wird eine vorteilhaft hohe Transmission im sichtbaren Spektralbereich und eine besonders vorteilhafte elektrische Leitfähigkeit erreicht.

Typischerweise ist jeweils zwischen zwei benachbarten funktionellen Schichten der beheizbaren Beschichtung zumindest eine dielektrische Schicht angeordnet. Bevorzugt ist unterhalb der ersten und/oder oberhalb der letzten funktionellen Schicht eine weitere dielektrische Schicht angeordnet. Eine dielektrische Schicht enthält zumindest eine Einzelschicht aus einem dielektrischen Material, beispielsweise enthaltend ein Nitrid wie Siliziumnitrid oder ein Oxid wie Aluminiumoxid. Dielektrische Schicht können aber auch mehrere Einzelschichten umfassen, beispielsweise Einzelschichten eines einem dielektrischen Material, Glättungsschichten, Anpassungsschichten, Blockerschichten und / oder Antireflexionsschichten. Die Dicke einer dielektrischen Schicht beträgt beispielsweise von 10 nm bis 200 nm.

Dieser Schichtaufbau wird im Allgemeinen durch eine Folge von Abscheidevorgängen erhalten, die durch ein Vakuumverfahren wie die magnetfeldgestützte Kathodenzerstäubung durchgeführt werden.

Weitere geeignete elektrisch leitfähigen Beschichtungen enthalten bevorzugt Indium-Zinnoxid (ITO), fluordotiertes Zinnoxid (SnO₂:F) oder aluminiumdotiertes Zinkoxid (ZnO:Al).

Die elektrisch leitfähige Beschichtung kann prinzipiell jede Beschichtung sein, die elektrisch kontaktiert werden kann. Soll die erfindungsgemäße Scheibe die Durchsicht ermöglichen, wie es beispielsweise bei Scheiben im Fensterbereich der Fall ist, so ist die elektrisch leitfähige Beschichtung bevorzugt transparent. In einer vorteilhaften Ausgestaltung ist die elektrisch leitfähige Beschichtung eine Schicht oder ein Schichtaufbau mehrere Einzelschichten mit einer Gesamtdicke von kleiner oder gleich 2 µm, besonders bevorzugt kleiner oder gleich 1 µm.

Eine vorteilhafte erfindungsgemäße elektrische Heizschicht weist einen Flächenwiderstand von 0,4 Ohm/Quadrat bis 10 Ohm/Quadrat auf. In einer besonders bevorzugten Ausgestaltung weist die erfindungsgemäße elektrische Heizschicht einen Flächenwiderstand von 0,5 Ohm/Quadrat bis 1 Ohm/Quadrat auf. Beschichtungen mit derartigen Flächenwiderständen eignen sich besonders zur Beheizung von Fahrzeugscheiben bei typischen Bordspannungen von 12 V bis 48 Volt oder bei Elektrofahrzeugen mit typischen Bordspannungen von bis zu 500 V.

Die elektrische Heizschicht kann sich über die gesamte Oberfläche der ersten Scheibe erstrecken. Die elektrische Heizschicht kann sich alternativ aber auch nur über einen Teil der Oberfläche der ersten Scheibe erstrecken. Die elektrische Heizschicht erstreckt sich bevorzugt über mindestens 50%, besonders bevorzugt über mindestens 70% und ganz besonders bevorzugt über mindestens 90% der innenseitigen Oberfläche der ersten Scheibe. Die elektrische Heizschicht kann eine oder mehrere unbeschichtete Zonen aufweisen. Diese Zonen können für elektromagnetische Strahlung durchlässig sein und sind beispielsweise als Datenübertragungsfenster oder Kommunikationsfenster bekannt.

In einer vorteilhaften Ausgestaltung einer erfindungsgemäßen Scheibe als Verbundscheibe weist die innenseitige Oberfläche der ersten Scheibe einen umlaufenden Randbereich mit einer Breite von 2 mm bis 50 mm, bevorzugt von 5 mm bis 20 mm auf, der nicht mit der elektrisch leitfähigen Beschichtung der elektrische Heizschicht versehen ist. Die elektrisch leitfähige Beschichtung weist dann keinen Kontakt zur Atmosphäre auf und ist im Inneren der Scheibe durch die thermoplastische Zwischenschicht vorteilhaft vor Beschädigungen und Korrosion geschützt.

Die elektrische Zuleitung ist bevorzugt als flexibler Folienleiter (Flachleiter, Flachbandleiter) ausgebildet. Darunter wird ein elektrischer Leiter verstanden, dessen Breite deutlich größer ist als seine Dicke. Ein solcher Folienleiter ist beispielsweise ein Streifen oder Band enthaltend oder bestehend aus Kupfer, verzinntem Kupfer, Aluminium, Silber, Gold oder Legierungen davon. Der Folienleiter weist beispielsweise eine Breite von 2 mm bis 16 mm und eine Dicke von 0,03 mm bis 0,1 mm auf. Der Folienleiter kann eine isolierende, bevorzugt polymere Ummantelung, beispielsweise auf Polyimid-Basis aufweisen. Folienleiter, die sich zur Kontaktierung von elektrisch leitfähigen Beschichtungen in Scheiben eignen, weisen lediglich eine Gesamtdicke von beispielsweise 0,3 mm auf. Derart dünne Folienleiter können ohne Schwierigkeiten zwischen den einzelnen Scheiben in der thermoplastischen Zwischenschicht eingebettet werden. In einem Folienleiterband können sich mehrere voneinander elektrisch isolierte, leitfähige Schichten befinden.

Alternativ können auch dünne Metalldrähte als elektrische Zuleitung verwendet werden. Die Metalldrähte enthalten insbesondere Kupfer, Wolfram, Gold, Silber oder Aluminium oder Legierungen mindestens zweier dieser Metalle. Die Legierungen können auch Molybdän, Rhenium, Osmium, Iridium, Palladium oder Platin enthalten.

In einer vorteilhaften Ausgestaltung der Erfindung wird die elektrische Zuleitung mit einem Kontaktband verbunden, beispielsweise mittels einer Lotmasse oder eines elektrisch leitfähigen Klebstoffs. Das Kontaktband ist dann mit dem Sammelleiter verbunden. Das Kontaktband erhöht vorteilhaft die Stromtragfähigkeit des Sammelleiters. Außerdem kann durch das Kontaktband eine unerwünschte Erhitzung der Kontaktstelle zwischen Sammelleiter und Zuleitung verringert werden. Zudem vereinfacht das Kontaktband die elektrische Kontaktierung des Sammelleiters durch die elektrische Zuleitung, weil die Zuleitung nicht mit dem bereits aufgebrachten Sammelleiter verbunden, beispielsweise verlötet werden muss.

Das Kontaktband enthält bevorzugt zumindest ein Metall, besonders bevorzugt Kupfer, verzinntes Kupfer, Silber, Gold, Aluminium, Zink, Wolfram und / oder Zinn. Das ist besonders vorteilhaft im Hinblick auf die elektrische Leitfähigkeit des Kontaktbandes. Das Kontaktband kann auch Legierungen enthalten, welche bevorzugt eines oder mehrere der genannten Elemente und gegebenenfalls weitere Elemente enthält, beispielsweise Messing oder Bronze.

Das Kontaktband ist bevorzugt als Streifen einer dünnen, elektrisch leitfähigen Folie ausgebildet. Die Dicke des Kontaktbandes beträgt bevorzugt von 10 µm bis 500 µm, besonders bevorzugt von 15 µm bis 200 µm, ganz besonders bevorzugt von 50 µm bis 100 µm. Folien mit diesen Dicken sind technisch einfach herzustellen und leicht verfügbar und weisen zudem einen vorteilhaft geringen elektrischen Widerstand auf.

Die Länge des Kontaktbandes beträgt bevorzugt von 10 mm bis 400 mm, besonders bevorzugt von 10 mm bis 100 mm und insbesondere 20 mm bis 60 mm. Das ist besonders vorteilhaft im Hinblick auf eine gute Handhabbarkeit des Kontaktbandes sowie auf eine zur elektrischen Kontaktierung ausreichend große Kontaktfläche zwischen Sammelleiter und Kontaktband.

Die Breite des Kontaktbandes beträgt bevorzugt von 2 mm bis 40 mm, besonders bevorzugt von 5 mm bis 30 mm. Das ist besonders vorteilhaft im Hinblick auf die Kontaktfläche zwischen Kontaktband und Sammelleiter und eine einfache Verbindung des Kontaktbandes mit der elektrischen Zuleitung. Die Ausdrücke Länge und Breite des Kontaktbandes bezeichnen jeweils die Abmessung in der gleichen Ausbreitungsrichtung, durch die die Länge beziehungsweise Breite des Sammelleiters gegeben ist.

In einer bevorzugten Ausgestaltung steht das Kontaktband vollflächig mit dem Sammelleiter in direktem Kontakt. Dazu wird ein Kontaktband auf den Sammelleiter aufgelegt. Der besondere Vorteil liegt in einer einfachen Herstellung der Scheibe und der Ausnutzung der gesamten Fläche des Kontaktbandes als Kontaktfläche.

Das Kontaktband kann einfach auf den Sammelleiter aufgelegt sein und wird innerhalb der laminierten Scheibe dauerhaft stabil an der vorgesehenen Position fixiert.

Die Erfindung umfasst weiter ein Verfahren zur Herstellung einer Scheibe mit elektrischer Kontaktierung, mindestens umfassend:
(a) Aufbringen einer elektrischen Heizschicht mit mindestens einer unbeschichteten Zone (8) auf eine Oberfläche (III) einer ersten Scheibe,
(b) Aufbringen von mindestens zwei zum Anschluss an eine Spannungsquelle vorgesehene und zueinander im Wesentlichen parallele Sammelleiter, die mit der elektrischen Heizschicht so verbunden werden, dass zwischen den Sammelleitern ein Strompfad für einen Heizstrom geformt wird und
(c) Einbringen von n Trennlinien, die die elektrische Heizschicht in m Segmente elektrisch unterteilen, wobei n eine ganze Zahl ≥1 ist und m = n+1 gilt, wobei die Segmente zumindest teilweise streifenförmig so um die unbeschichtete Zone angeordnet werden, dass der Strompfad für den Heizstrom zumindest teilweise um die unbeschichtete Zone geführt wird und die Breite b aller Segmente gleich ist und die Summe der Breiten b der Segmente gleich der Breite B der elektrischen Heizschicht ist.

Verlaufen die Sammelleiter parallel oder annähernd parallel zueinander, wird die Breite B vorteilhafterweise entlang einer Linie parallel zu den Sammelleitern bestimmt. Weist die elektrische Heizschicht eine unbeschichtete Zone auf, so ist die Breite B die Summe der Breiten der elektrischen Heizschicht, die die unbeschichtete Zone umgeben, das heißt Bei der Bestimmung der Breite B wird die Breite der unbeschichteten Zone entlang der parallelen Linie nicht berücksichtigt.

Das Aufbringen der elektrischen Heizschicht in Verfahrensschritt (a) kann durch an sich bekannte Verfahren erfolgen, bevorzugt durch magnetfeldunterstützte Kathodenzerstäubung. Das ist besonders vorteilhaft im Hinblick auf eine einfache, schnelle, kostengünstige und gleichmäßige Beschichtung der ersten Scheibe. Die elektrischen Heizschicht kann aber auch beispielsweise durch Aufdampfen, chemische Gasphasenabscheidung (chemical vapour deposition, CVD), plasmagestützte Gasphasenabscheidung (PECVD) oder durch nasschemische Verfahren aufgebracht werden.

Die erste Scheibe kann nach Verfahrensschritt (a) einer Temperaturbehandlung unterzogen werden. Dabei wird die erste Scheibe mit der elektrisch leitfähigen Beschichtung auf eine Temperatur von mindestens 200°C, bevorzugt mindestens 300°C erwärmt. Die Temperaturbehandlung kann der Erhöhung der Transmission und / oder der Verringerung des Flächenwiderstands der elektrischen Heizschicht dienen.

Die erste Scheibe kann nach Verfahrensschritt (a) gebogen werden, typischerweise bei einer Temperatur von 500 °C bis 700 °C. Da es technisch einfacher ist, eine plane Scheibe zu beschichten, ist dieses Vorgehen vorteilhaft, wenn die erste Scheibe gebogen werden soll. Alternativ kann die erste Scheibe aber auch vor Verfahrensschritt (a) gebogen werden, beispielsweise wenn die elektrische Heizschicht nicht dazu geeignet ist, einen Biegeprozess ohne Beschädigungen zu überstehen.

Das Aufbringen des Sammelleiters in Verfahrensschritt (b) erfolgt bevorzugt durch Aufdrucken und Einbrennen einer elektrisch leitfähigen Paste in einem Siebdruckverfahren oder in einem Inkjet-Verfahren. Alternativ kann der Sammelleiter als Streifen einer elektrisch leitfähigen Folie auf die elektrisch leitfähige Beschichtung aufgebracht, bevorzugt aufgelegt, angelötet oder angeklebt werden.

Bei Siebdruckverfahren erfolgt die laterale Formgebung durch die Maskierung des Gewebes, durch das die Druckpaste mit den Metallpartikeln gedrückt wird. Durch eine geeignete Formgebung der Maskierung kann beispielsweise die Breite b des Sammelleiters besonders einfach vorgeben und variiert werden.

Die Entschichtung einzelner Trennlinien in der elektrisch leitfähigen Beschichtung erfolgt vorzugsweise durch einen Laserstrahl. Verfahren zum Strukturieren dünner Metallfilme sind beispielsweise aus EP 2 200 097 A1 oder EP 2 139 049 A1 bekannt. Die Breite der Entschichtung beträgt bevorzugt 10 µm bis 1000 µm, besonders bevorzugt 30 µm bis 200 µm und insbesondere 70 µm bis 140 µm. In diesem Bereich findet eine besonders saubere und rückstandsfreie Entschichtung durch den Laserstrahl statt. Die Entschichtung mittels Laserstrahl ist besonders vorteilhaft, da die entschichteten Linien optisch sehr unauffällig sind und das Erscheinungsbild und die Durchsicht nur wenig beeinträchtigen. Die Entschichtung einer Linie mit einer Breite, die breiter ist als die Breite eines Laserschnitts, erfolgt durch mehrmaliges Abfahren der Linie mit dem Laserstrahl. Die Prozessdauer und die Prozesskosten steigen deshalb mit zunehmender Linienbreite an. Alternativ kann die Entschichtung durch mechanisches Abtragen sowie durch chemisches oder physikalisches Ätzen erfolgen.

Eine vorteilhafte Weiterbildung des erfindungsgemäßen Verfahrens umfasst mindestens die folgenden weiteren Schritte:
(d) Anordnen einer thermoplastischen Zwischenschicht auf der beschichteten Oberfläche der ersten Scheibe und Anordnen einer zweiten Scheibe auf der thermoplastischen Zwischenschicht und
(e) Verbinden der ersten Scheibe und der zweiten Scheibe über die thermoplastische Zwischenschicht.

In Verfahrensschritt (d) wird die erste Scheibe so angeordnet, dass diejenige ihrer Oberflächen, welche mit der elektrisch leitfähigen Beschichtung versehen ist, der thermoplastischen Zwischenschicht zugewandt ist. Die Oberfläche wird dadurch zur innenseitigen Oberfläche der ersten Scheibe.

Die thermoplastische Zwischenschicht kann durch eine einzelne oder auch durch zwei oder mehrere thermoplastische Folien, die flächenmäßig übereinander angeordnet werden, ausgebildet werden.

Das Verbinden von erster und zweiter Scheibe in Verfahrensschritt (e) erfolgt bevorzugt unter Einwirkung von Hitze, Vakuum und/oder Druck. Es können an sich bekannte Verfahren zur Herstellung einer Scheibe verwendet werden.

Es können beispielsweise sogenannte Autoklavverfahren bei einem erhöhten Druck von etwa 10 bar bis 15 bar und Temperaturen von 130 °C bis 145 °C über etwa 2 Stunden durchgeführt werden. An sich bekannte Vakuumsack- oder Vakuumringverfahren arbeiten beispielsweise bei etwa 200 mbar und 80 °C bis 110 °C. Die erste Scheibe, die thermoplastische Zwischenschicht und die zweite Scheibe können auch in einem Kalander zwischen mindestens einem Walzenpaar zu einer Scheibe verpresst werden. Anlagen dieser Art sind zur Herstellung von Scheiben bekannt und verfügen normalerweise über mindestens einen Heiztunnel vor einem Presswerk. Die Temperatur während des Pressvorgangs beträgt beispielsweise von 40 °C bis 150 °C. Kombinationen von Kalander- und Autoklavverfahren haben sich in der Praxis besonders bewährt. Alternativ können Vakuumlaminatoren eingesetzt werden. Diese bestehen aus einer oder mehreren beheizbaren und evakuierbaren Kammern, in denen die erste Scheibe und die zweite Scheibe innerhalb von beispielsweise etwa 60 Minuten bei verminderten Drücken von 0,01 mbar bis 800 mbar und Temperaturen von 80°C bis 170°C laminiert werden.

Die Erfindung umfasst weiter die Verwendung der erfindungsgemäßen Scheibe mit elektrischer Kontaktierung in Gebäuden, insbesondere im Zugangsbereich, Fensterbereich, Dachbereich oder Fassadenbereich, als Einbauteil in Möbeln und Geräten, in Fortbewegungsmitteln für den Verkehr auf dem Lande, in der Luft oder zu Wasser, insbesondere in Zügen, Schiffen und Kraftfahrzeugen beispielsweise als Windschutzscheibe, Heckscheibe, Seitenscheibe und / oder Dachscheibe.

Im Folgenden wird die Erfindung anhand einer Zeichnung und Ausführungsbeispielen näher erläutert. Die Zeichnung ist eine schematische Darstellung und nicht maßstabsgetreu. Die Zeichnung schränkt die Erfindung in keiner Weise ein.

Es zeigen:
- Figur 1: eine Draufsicht auf eine Ausgestaltung der erfindungsgemäßen Scheibe mit elektrischer Heizschicht,
- Figur 2: eine Draufsicht auf eine Scheibe nach dem Stand der Technik,
- Figur 3: eine Draufsicht auf eine weitere Ausgestaltung der erfindungsgemäßen Scheibe,
- Figur 4: eine Draufsicht auf eine weitere Ausgestaltung der erfindungsgemäßen Scheibe,
- Figur 5: eine Draufsicht auf eine weitere Ausgestaltung der erfindungsgemäßen Scheibe und
- Figur 6: ein detailliertes Flussdiagramm einer Ausführungsform des erfindungsgemäßen Verfahrens.

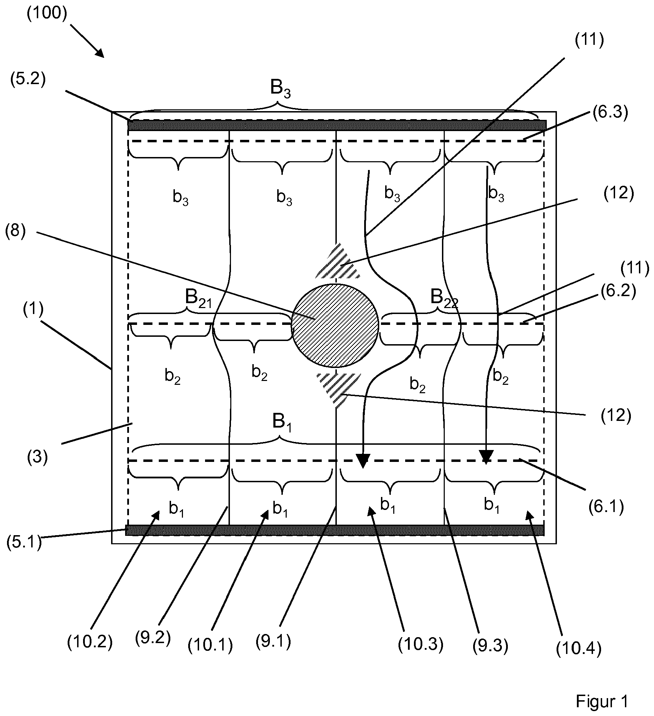

Figur 1 zeigt eine Draufsicht auf eine beispielhafte Ausgestaltung einer erfindungsgemäßen Scheibe 100 mit einer elektrischen Heizschicht 3. Die Scheibe 100 umfasst eine erste Scheibe 1 und besteht beispielsweise aus Natron-Kalkglas. Auf einer der Oberfläche III der ersten Scheibe 1 ist eine elektrische Heizschicht 3 aus einer elektrisch leitfähigen Beschichtung aufgebracht. Die elektrische Heizschicht 3 ist ein Schichtensystem, welches beispielsweise drei elektrisch leitfähige Silberschichten enthält, die durch dielektrische Schichten voneinander getrennt sind. Fließt ein Strom durch die elektrische Heizschicht 3, so wird sie infolge ihres elektrischen Widerstands und joulscher Wärmeentwicklung erwärmt. Die elektrische Heizschicht 3 kann daher für eine aktive Beheizung der Scheibe 100 verwendet werden. Die Abmessungen der Scheibe 100 betragen beispielsweise 1 m x 1 m.

Die elektrische Heizschicht 3 erstreckt sich beispielsweise über die gesamte Oberfläche III der ersten Scheibe 1 abzüglich eines umlaufenden rahmenförmigen unbeschichteten Bereichs mit einer Breite von jeweils 1 cm.

Zur elektrischen Kontaktierung der elektrischen Heizschicht 3 ist jeweils ein erster Sammelleiter 5.1 im unteren Randbereich und ein weiterer, zweiter Sammelleiter 5.2 im oberen Randbereich auf der elektrischen Heizschicht 3 angeordnet. Die Sammelleiter 5.1, 5.2 enthalten beispielsweise Silberpartikel und wurden im Siebdruckverfahren aufgebracht und anschließend eingebrannt. Die Länge der Sammelleiter 5.1, 5.2 entspricht annähernd der Ausdehnung der elektrischen Heizschicht 3. Beide Sammelleiter 5.1,5.2 verlaufen annähernd parallel.

Wird an die Sammelleiter 5.1 und 5.2 eine elektrische Spannung aus angelegt, so fließt ein gleichmäßiger Strom entlang von Strompfaden 11 durch die elektrische Heizschicht 3 zwischen den Sammelleitern 5.1,5.2. Auf jedem Sammelleiter 5.1,5.2 ist ungefähr mittig eine Zuleitung 7 angeordnet, die mit dem Sammelleiter 5.1,5.2 elektrisch leitend verbunden ist. Über die elektrischen Zuleitungen 7 sind die Sammelleiter 5.1,5.2 mit einer Spannungsquelle

In der Mitte der Scheibe 100 ist eine unbeschichtete Zone 8 angeordnet. Die unbeschichtete Zone 8 weist kein elektrisch leitfähiges Material der elektrischen Heizschicht 3 auf. Die unbeschichtete Zone 8 ist hier beispielsweise vollständig von der elektrischen Heizschicht 3 umgeben. Die unbeschichteten Zone 8 ist beispielsweise kreisförmig ausgebildet und hat einen Durchmesser von 10 cm.

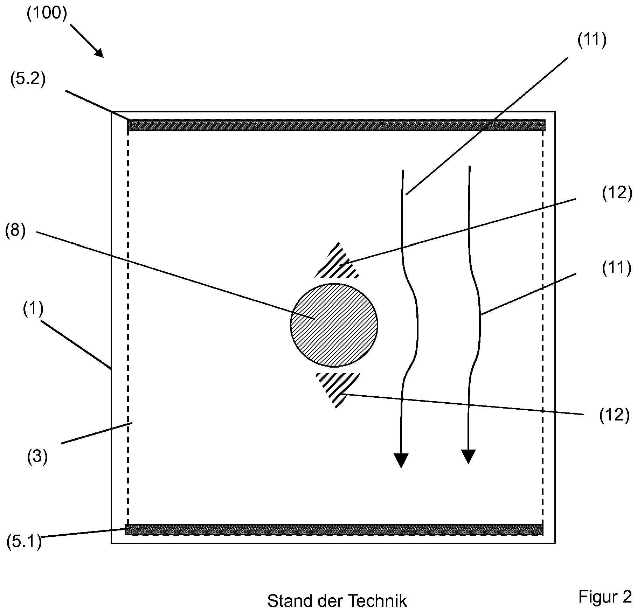

Die elektrische Heizschicht 3 weist hier n =3 Trennlinien 9.1,9.2,9.3 auf. Im Bereich der Trennlinien 9.1,9.2,9.3 ist die elektrische Heizschicht 3 elektrisch unterbrochen. Die Trennlinien 9.1,9.2,9.3 sind streifenförmig um die unbeschichtete Zone 8 angeordnet und bilden vier Segmente 10.1,10.2,10.3,10.4 in der elektrischen Heizschicht 3. Die Strompfade 11 werden durch die Segmente 10.1,10.2,10.3,10.4 in der elektrischen Heizschicht 3 um die unbeschichtete Zone 8 gelenkt. Dabei werden insbesondere die Strompfade 11 in den Segmenten 10.1,10.3 in unmittelbarerer Nachbarschaft zur unbeschichteten Zone 8 in die Bereiche 12 oberhalb und unterhalb der unbeschichteten Zone 8 geführt. In diesem Bereich würde in einer elektrischen Heizschicht 3 nach dem Stand der Technik ohne Trennlinien nur eine geringe Heizleistung erzielt werden (siehe Figur 2).

Die Trennlinien 9.1,9.2,9.3 haben lediglich eine Breite von beispielsweise 100 µm und sind beispielsweise durch Laserstrukturierung in die elektrische Heizschicht 3 eingebracht. Trennlinien 9.1,9.2,9.3 mit einer derart geringen Breite sind optisch kaum wahrnehmbar und stören die Durchsicht durch die Scheibe 100 nur wenig, was besonders für eine Verwendung in Fahrzeugen von besonderer Wichtigkeit für die Fahrsicherheit ist.

Die Breite b der Segmente 10.1,10.2,10.3,10.4 ist abhängig von der Breite B der elektrischen Heizschicht 3 in einer jeweiligen Linie 6 parallel zu den Sammelleitern 5.1,5.2. und ergibt sich durch Division der Breite B durch die Anzahl der Segmente. In Figur 1 sind beispielhaft drei parallele Linien 6.1,6.2,6.3 eingezeichnet. Die elektrische Heizschicht 3 hat entlang der Linie 6.1 beispielsweise ein Breite B₁ von 98 cm. Die Breite b₁ der Segmente 10.1,10.2,10.3,10.4 beträgt dann ¼ B₁ = 24,5 cm. Da die Trennlinien eine sehr geringe Breite von beispielsweise 100 µm aufweisen, kann dies bei der Abschätzung der Breite b₁ vernachlässigt werden. Da die Scheibe 100 in diesem Beispiel rechteckförmig ausgestaltet ist, beträgt die Breite B₃ entlang der Linie 6.3 ebenfalls 98 cm und die Breite b₃ beträgt ebenfalls 24,5 cm.

Die Breite B₂ der elektrischen Heizschicht 3 entlang einer Linie 6.2 im Bereich der unbeschichteten Zone 8 ergibt sich durch die Summe B₂₁+B₂₂, das heißt die Strecke entlang der Linie 6.2 in der unbeschichteten Zone 8 ist nicht Teil der Breite B₂. Die Breite B₂ beträgt hier beispielsweise 88 cm, so dass die Breite b₂ der Segmente10.1,10.2,10.3,10.4 22 cm beträgt.

Figur 2 zeigt eine Scheibe 100 nach dem Stand der Technik. Die erste Scheibe 1, die Sammelleiter 5.1,5.2, die elektrische Heizschicht 3 sowie die unbeschichtete Zone 8 entsprechen der Scheibe 100 aus Figur 1. Die Scheibe 100 nach dem Stand weist keine Trennlinien und folglich keine Segmente auf, die den Strompfad 11 um die unbeschichtete Zone 8 führen. Die Heizleistungsverteilung der Scheibe 100 nach dem Stand der Technik ist sehr inhomogen. Durch die Bereichen 12 oberhalb und unterhalb der unbeschichteten Zone 8 fließt nur ein geringer Strom und die Scheibe 100 nach dem Stand der Technik wird in den Bereichen 12 nur geringfügig erwärmt.

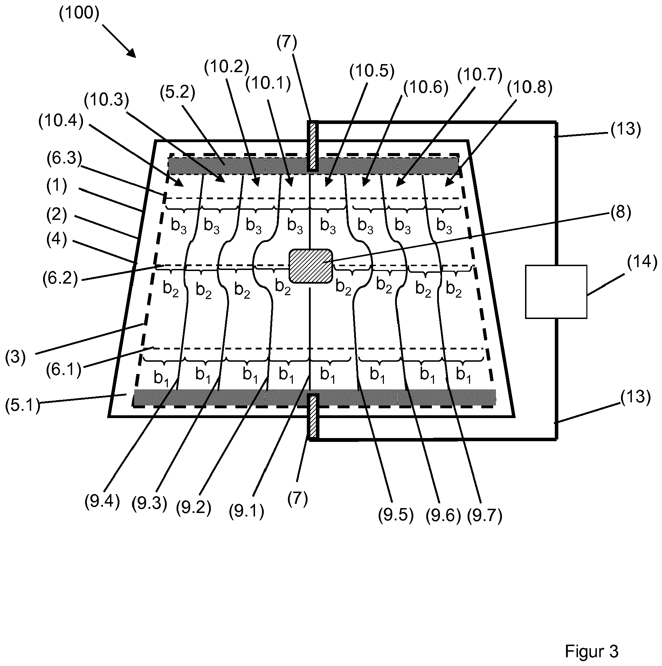

Figur 3 zeigt eine Draufsicht auf eine weitere beispielhafte Ausgestaltung einer erfindungsgemäßen Scheibe 100 mit elektrischer Heizschicht. Die Scheibe 100 umfasst eine erste Scheibe 1 und eine zweite Scheibe 2, die über eine thermoplastische Zwischenschicht 4 miteinander verbunden sind. Die Scheibe 100 ist beispielsweise eine Fahrzeugscheibe und insbesondere die Windschutzscheibe eines Personenkraftwagens. Die erste Scheibe 1 ist beispielsweise dafür vorgesehen, in Einbaulage dem Innenraum zugewandt zu sein. Die erste Scheibe 1 und die zweite Scheibe 2 bestehen aus Natron-Kalkglas. Die Dicke der ersten Scheibe 1 beträgt beispielsweise 1,6 mm und die Dicke der zweiten Scheibe 2 beträgt 2,1 mm. Die thermoplastische Zwischenschicht 4 besteht aus Polyvinylbutyral (PVB) und weist eine Dicke von 0,76 mm auf. Auf der innenseitigen Oberfläche III der ersten Scheibe 1 ist eine elektrische Heizschicht 3 aus einer elektrisch leitfähigen Beschichtung aufgebracht. Die elektrische Heizschicht 3 ist ein Schichtensystem, welches beispielsweise drei elektrisch leitfähige Silberschichten enthält, die durch dielektrische Schichten voneinander getrennt sind. Fließt ein Strom durch die elektrische Heizschicht 3, so wird sie infolge ihres elektrischen Widerstands und joulscher Wärmeentwicklung erwärmt. Die elektrische Heizschicht 3 kann daher für eine aktive Beheizung der Scheibe 100 verwendet werden.

Die elektrische Heizschicht 3 erstreckt sich beispielsweise über die gesamte Oberfläche III der ersten Scheibe 1 abzüglich eines umlaufenden rahmenförmigen unbeschichteten Bereichs mit einer Breite von 8 mm. Der unbeschichtete Bereich dient der elektrischen Isolierung zwischen der spannungsführenden elektrische Heizschicht 3 und der Fahrzeugkarosserie. Der unbeschichtete Bereich ist durch Verkleben mit der Zwischenschicht 4 hermetisch versiegelt, um die elektrische Heizschicht 3 vor Beschädigungen und Korrosion zu schützen.

Zur elektrischen Kontaktierung der elektrischen Heizschicht 3 ist jeweils ein erster Sammelleiter 5.1 im unteren Randbereich und ein weiterer, zweiter Sammelleiter 5.2 im oberen Randbereich auf der elektrisch leitfähigen Beschichtung 3 angeordnet. Die Sammelleiter 5.1, 5.2 enthalten beispielsweise Silberpartikel und wurden im Siebdruckverfahren aufgebracht und anschließend eingebrannt. Die Länge der Sammelleiter 5.1, 5.2 entspricht annähernd der Ausdehnung der elektrischen Heizschicht 3.

Wird an die Sammelleiter 5.1 und 5.2 eine elektrische Spannung angelegt, so fließt ein gleichmäßiger Strom durch die elektrische Heizschicht 3 zwischen den Sammelleitern 5.1,5.2. Auf jedem Sammelleiter 5.1,5.2 ist ungefähr mittig eine Zuleitung 7 angeordnet. Die Zuleitung 7 ist ein an sich bekannter Folienleiter. Die Zuleitung 7 ist über eine Kontaktfläche mit dem Sammelleiter 5.1,5.2 elektrisch leitend verbunden, beispielsweise mittels einer Lotmasse, eines elektrisch leitfähigen Klebstoffs oder durch einfaches Aufliegen und Andruck innerhalb der Scheibe 100. Der Folienleiter enthält beispielsweise eine verzinnte Kupferfolie mit einer Breite von 10 mm und einer Dicke von 0,3 mm. Über die elektrischen Zuleitungen 7 sind die Sammelleiter 5.1,5.2 über Verbindungskabel 13 mit einer Spannungsquelle 14 verbunden, welche eine für Kraftfahrzeuge übliche Bordspannung, bevorzugt von 12 V bis 15 V und beispielsweise etwa 14 V bereitstellt. Alternativ kann die Spannungsquelle 14 auch höhere Spannungen aufweisen, beispielsweise von 35 V bis 45 V und insbesondere 42 V.

In der Scheibe 100 ist etwa mittig zur Scheibenbreite eine unbeschichtete Zone 8 angeordnet. Die unbeschichtete Zone 8 weist kein elektrisch leitfähiges Material der elektrischen Heizschicht 3 auf. Die unbeschichtete Zone 8 ist hier beispielsweise vollständig von der elektrischen Heizschicht 3 umgeben. Alternativ kann die unbeschichtete Zone 8 am Rand der elektrischen Heizschicht 3 angeordnet sein. Die Fläche der unbeschichteten Zone 8 beträgt beispielsweise 1,5 dm². Die Länge der unbeschichteten Zone 8 beträgt beispielsweise 10 cm. Länge bedeutet hier die Abmessung in die Richtung, die in Richtung des Strompfads durch die Scheibe, also in Richtung der kürzesten Verbindungslinie zwischen den Sammelleitern 5.1,5.2 verläuft. Im Beispiel der Fahrzeugscheibe aus Figur 1 ist die Länge der unbeschichteten Zone 8 in vertikaler Richtung und die Breite in horizontaler Richtung, parallel zu den Sammelleitern 5.1,5.2 angeordnet. Die unbeschichtete Zone 8 grenzt an ihrem oberen Ende an den Sammelleiter 5.3.

Die Sammelleiter 5.1,5.2,5.3 haben im dargestellten Beispiel eine konstante Dicke von beispielsweise etwa 10 µm und einen konstanten spezifische Widerstand von beispielsweise 2.3 µOhm•cm.

Die elektrische Heizschicht 3 weist hier n =7 Trennlinien 9.1-9.7 auf. Im Bereich der Trennlinien 9.1-9.7 ist die elektrische Heizschicht 3 elektrisch unterbrochen. Die Trennlinien 9.1-9.7 sind streifenförmig um die unbeschichtete Zone 8 angeordnet und bilden 8 Segmente 10.1-10.8 in der elektrischen Heizschicht 3. Nach Anlegen einer Spannung an die Sammelleiter 5.1,5.2 wird der elektrische Strom durch die Segmente 10.1-10.8 in der elektrischen Heizschicht 3 um die unbeschichtete Zone 8 gelenkt.

Die Trennlinien 9.1-9.7 haben lediglich eine Breite von beispielsweise 100 µm und sind beispielsweise durch Laserstrukturierung in die elektrische Heizschicht 3 eingebracht. Trennlinien 9.1-9.7 mit einer derart geringen Breite sind optisch kaum wahrnehmbar und stören die Durchsicht durch die Scheibe 100 nur wenig, was besonders für eine Verwendung in Fahrzeugen von besonderer Wichtigkeit für die Fahrsicherheit ist.

Die Breite b der Segmente 10.1-10.8 ist abhängig von der Breite B der elektrischen Heizschicht 3 in einer jeweiligen Linie 6 parallel zu den Sammelleitern 5.1,5.2. Die Breite b der Segmente 10.1-10.8 ergibt sich durch Division der Breite B durch die Anzahl der Segmente. In Figur 2 sind beispielhaft drei parallele Linien 6.1,6.2,6.3 eingezeichnet. Die elektrische Heizschicht 3 hat entlang der Linie 6.1 beispielsweise ein Breite B₁. Die Breite b₁ der Segmente 10.1-10.8 beträgt dann 1/8 B₁. Da die elektrische Heizschicht 3 in diesem Beispiel trapezförmig ausgestaltet ist, beträgt die Breite b₃ der Segmente 10.1-10.8 entlang der Linie 6.3 1/8 B₃. Die Breite B₂ entlang der Linie 6.2 ist wie in Figur 1 ausgeführt ohne die Breite der unbeschichteten Zone 8 zu verstehen.

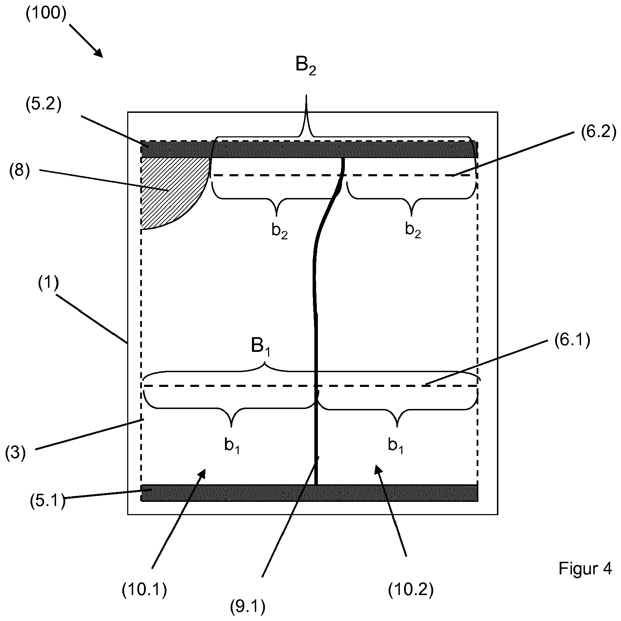

Figur 4 zeigt eine Draufsicht auf eine weitere Ausgestaltung einer erfindungsgemäßen Scheibe 100. Die erste Scheibe 1, die Sammelleiter 5.1,5.2 und die elektrische Heizschicht 3 entsprechen der Scheibe 100 aus Figur 1. Eine unbeschichtete Zone 8 ist beispielhaft in der linken, oberen Ecke der Scheibe 100 angeordnet.

Die elektrische Heizschicht 3 weist hier n =1 Trennlinie 9.1 auf. Im Bereich der Trennlinie 9.1, die die elektrische Heizschicht in zwei Segmente 10.1,10.2 unterteilt. Die elektrische Heizschicht 3 hat entlang der Linie 6.1 beispielsweise ein Breite B₁ von 98 cm. Die Breite b₁ der Segmente 10.1,10.2 beträgt dann 1/2 B₁ = 49 cm.

Die Breite B₂ der elektrischen Heizschicht 3 entlang einer Linie 6.2 im Bereich der unbeschichteten Zone 8 beträgt beispielsweise 93 cm, so dass die Breite b₂ der Segmente10.1,10.2 46,5 cm beträgt.

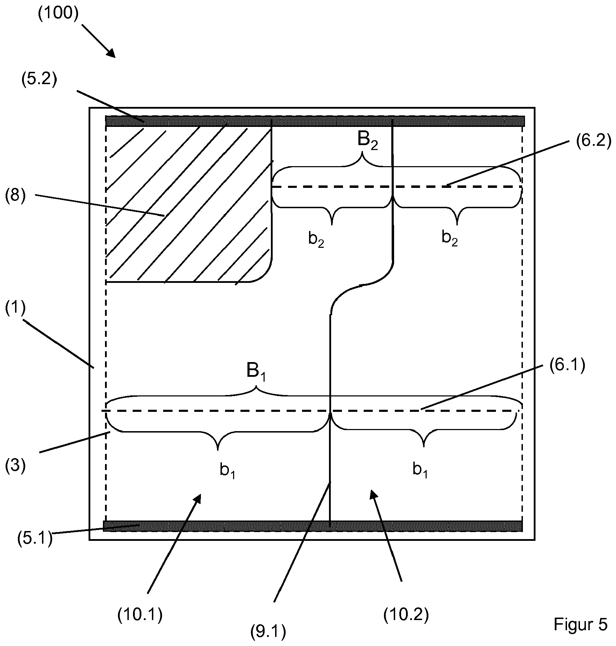

Figur 5 zeigt eine Draufsicht auf eine weitere Ausgestaltung einer erfindungsgemäßen Scheibe 100. Die erste Scheibe 1, die Sammelleiter 5.1,5.2 und die elektrische Heizschicht 3 entsprechen der Scheibe 100 aus Figur 1. Eine unbeschichtete Zone 8 ist beispielhaft in der linken, oberen Ecke der Scheibe 100 angeordnet. Die unbeschichtete Zone 8 hat beispielsweise eine rechteckige Form mit einer abgerundeten Ecke. Abgerundete Ecken in der elektrischen Heizschicht 3 sind besonders vorteilhaft, da dadurch lokale Wärmezentren, sogenannte Hotspots, vermieden werden.

Die elektrische Heizschicht 3 weist hier n =1 Trennlinie 9.1 auf. Im Bereich der Trennlinie 9.1, die die elektrische Heizschicht in zwei Segmente 10.1,10.2 unterteilt. Die elektrische Heizschicht 3 hat entlang der Linie 6.1 beispielsweise ein Breite B₁ von 98 cm. Die Breite b₁ der Segmente 10.1,10.2 beträgt dann 1/2 B₁ = 49 cm.

Die Breite B₂ der elektrischen Heizschicht 3 entlang einer Linie 6.2 im Bereich der unbeschichteten Zone 8 beträgt beispielsweise 93 cm, so dass die Breite b₂ der Segmente10.1,10.2 46,5 cm beträgt.

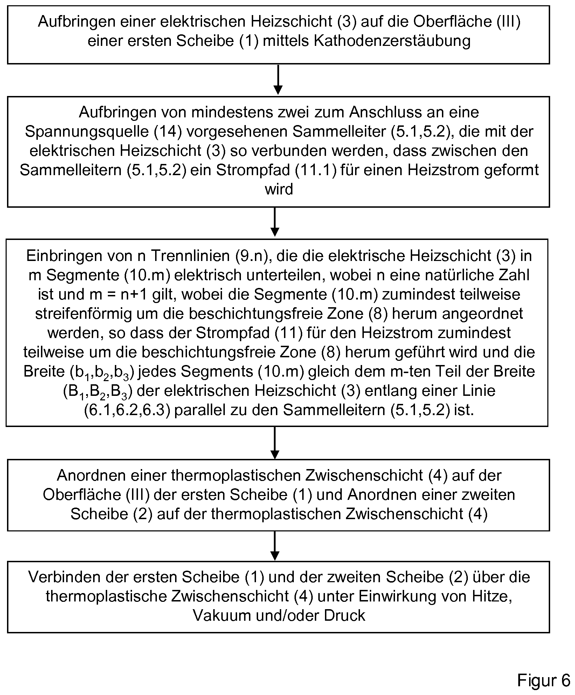

Figur 6 zeigt ein Flussdiagramm eines Ausführungsbeispiels des erfindungsgemäßen Verfahrens zur Herstellung einer Scheibe 100 mit elektrischer Heizschicht 3 am Beispiel einer Verbundglasscheibe.

Die erfindungsgemäße Scheibe 100 nach den Figuren 1 und 3-5 weist verbesserte Heizeigenschaften, wie eine homogenere Heizleistungsverteilung und eine homogenere Temperaturverteilung auf, insbesondere im kritischen Bereich 12 unterhalb der unbeschichteten Zone 8. Durch die geringe Breite der laserstrukturierten Trennlinien 9 ist die Sicht durch die Scheibe nur minimal beeinträchtigt und genügt den Anforderungen an eine Fahrzeugverglasung.

Dieses Ergebnis war für den Fachmann unerwartet und überraschend.

### Bezugszeichenliste:

- (1): erste Scheibe
- (2): zweite Scheibe
- (3): elektrische Heizschicht, elektrisch leitfähige Beschichtung,
- (4): thermoplastische Zwischenschicht
- (5.1),(5.2): Sammelleiter
- (6.1),(6.2),(6.3): Linie
- (7): Zuleitung
- (8): unbeschichteter Bereich, Kommunikationsfenster
- (9.1),(9.2),(9.3),(9.4),(9.5),(9.6),(9.7): Trennlinie, Trennzone
- (10.1),(10.2),(10.3),(10.4),(10.5),(10.6),(10.7),(10.8): Segment
- (11): Strompfad
- (12): Bereich
- (13): Verbindungskabel
- (14): Spannungsquelle
- (100): Scheibe, elektrisch beheizbare Scheibe

- (III): Oberfläche der ersten Scheibe 1

- b, b₁, b₂, b₃: Breite des Segmente 10.1-10.8
- B, B₁, B₂, B₃: Breite der elektrischen Heizschicht 3
- d: Breite der Trennlinie 9.1-9.7

## Patentansprüche

1. Scheibe (100) mit elektrischer Heizschicht (3), mindestens umfassend:
- eine Scheibe (1) mit einer Oberfläche (III),
- mindestens eine elektrische Heizschicht (3), die zumindest auf einem Teil der Oberfläche (III) aufgebracht ist und mindestens eine unbeschichtete Zone (8) umfasst,
- mindestens zwei zum Anschluss an eine Spannungsquelle (14) vorgesehene Sammelleiter (5.1,5.2), die mit der elektrischen Heizschicht (3) so verbunden sind, dass zwischen den Sammelleitern (5.1,5.2) ein Strompfad (11) für einen Heizstrom geformt ist und
- n Trennlinien (9.n), die die elektrische Heizschicht (3) in m Segmente (10.m) elektrisch unterteilen und n eine ganze Zahl ≥1 ist und m = n+1 gilt,
wobei die Segmente (10.m) streifenförmig um die unbeschichtete Zone (8) so angeordnet sind, dass der Strompfad (11) für den Heizstrom um die unbeschichtete Zone (8) geführt ist und die Breite (b) der Segmente (10.m) gleich ist und die Summe der Breiten (b) der Segmente (10.m) gleich der Breite (B) der elektrischen Heizschicht (3) ist, wobei sich die Breite (B) der elektrischen Heizschicht (3) ohne eine Breite der unbeschichteten Zone (8) entlang einer jeweiligen Linie parallel zu den Sammelleitern (5.1, 5.2) oder entlang einer Äquipotentiallinie der Heizschicht (3) ohne unbeschichtete Zone (8) bemisst.

2. Scheibe (100) nach Anspruch 1, wobei die elektrische Heizschicht (3) mindestens n = 3 Trennlinien (9.1,9.2,9.3) und bevorzugt n = 7 bis 25 Trennlinien (9.n) aufweist.

3. Scheibe (100) nach Anspruch 1 oder Anspruch 2, wobei Breite d der Trennlinie (9.n) von 30 µm bis 200 µm und bevorzugt von 70 µm bis 140 µm beträgt.

4. Scheibe (100) nach einem der Ansprüche 1 bis 3, wobei Fläche der unbeschichteten Zone (8) von 0,5 dm² bis 15 dm² und bevorzugt von 2 dm² bis 8 dm² beträgt.

5. Scheibe (100) nach einem der Ansprüche 1 bis 4, wobei der Sammelleiter (5.1,5.2) als gebrannte Druckpaste ausgebildet ist, die bevorzugt metallische Partikel, Metallpartikel und/oder Kohlenstoffpartikel und insbesondere Silberpartikel enthält und bevorzugt einen spezifischen Widerstand ρₐ von 0.8 µOhm•cm bis 7.0 µOhm•cm und besonders bevorzugt von 1.0 µOhm•cm bis 2.5 µOhm•cm aufweist und/oder eine maximale Breite von 4 mm bis 30 mm, bevorzugt von 4 mm bis 20 mm und besonders bevorzugt von 10 mm bis 20 mm aufweist.

6. Scheibe (100) nach einem der Ansprüche 1 bis 5, wobei mindestens zwei Sammelleiter (5) auf dem Bereich der elektrischen Heizschicht (3) angeordnet sind und/oder die Oberfläche (III) der Scheibe (1) über eine thermoplastische Zwischenschicht (4) mit einer zweiten Scheibe (2) flächig verbunden ist.

7. Scheibe (100) nach einem der Ansprüche 1 bis 6, wobei die Scheibe (1) und/oder die zweite Scheibe (2) Glas, bevorzugt Flachglas, Floatglas, Quarzglas, Borosilikatglas, Kalk-Natron-Glas, oder Polymere, bevorzugt Polyethylen, Polypropylen, Polycarbonat, Polymethylmethacrylat und/oder Gemische davon enthält.

8. Scheibe (100) nach einem der Ansprüche 1 bis 7, wobei die elektrische Heizschicht (3) eine transparente, elektrisch leitfähige Beschichtung ist und/ oder einen Flächenwiderstand von 0,4 Ohm/Quadrat bis 10 Ohm/Quadrat und bevorzugt von 0,5 Ohm/Quadrat bis 1 Ohm/Quadrat aufweist und/oder Silber (Ag), Indium-Zinnoxid (ITO), fluordotiertes Zinnoxid (SnO₂:F) oder aluminiumdotiertes Zinkoxid (ZnO:Al) enthält.

9. Verfahren zur Herstellung einer Scheibe (100) mit elektrischer Heizschicht, mindestens umfassend:
(a) Aufbringen einer elektrischen Heizschicht (3) mit mindestens einer unbeschichteten Zone (8) auf eine Oberfläche (III) einer Scheibe (1),
(b) Aufbringen von mindestens zwei zum Anschluss an eine Spannungsquelle (14) vorgesehene und zueinander parallele Sammelleiter (5.1,5.2), die mit der elektrischen Heizschicht (3) so verbunden werden, dass zwischen den Sammelleitern (5.1,5.2) ein Strompfad (11) für einen Heizstrom geformt wird und
(c) Einbringen von n Trennlinien (9.n), die die elektrische Heizschicht (3) in m Segmente (10.m) elektrisch unterteilen, wobei n eine ganze Zahl ≥1 ist und m = n+1 gilt, wobei die Segmente (10.m) zumindest teilweise streifenförmig so um die unbeschichtete Zone (8) angeordnet werden, dass der Strompfad (11) für den Heizstrom um die unbeschichtete Zone (8) geführt wird und die Breite b aller Segmente (10.m) gleich ist und die Summe der Breiten b der Segmente gleich der Breite B der elektrischen Heizschicht (3) ist;, wobei sich die Breite (B) der elektrischen Heizschicht (3) ohne eine Breite der unbeschichteten Zone (8) entlang einer jeweiligen Linie parallel zu den Sammelleitern (5.1, 5.2) oder entlang einer Äquipotentiallinie der Heizschicht (3) ohne unbeschichtete Zone (8) bemisst.

10. Verfahren nach Anspruch 9, wobei die Trennlinien (9.n) durch Laserstrukturierung eingebracht werden.

11. Verwendung der Scheibe (100) nach einen der Ansprüche 1 bis 8 in Fortbewegungsmitteln für den Verkehr auf dem Lande, in der Luft oder zu Wasser, insbesondere in Kraftfahrzeugen beispielsweise als Windschutzscheibe, Heckscheibe, Seitenscheiben und/oder Dachscheibe sowie als funktionales Einzelstück, und als Einbauteil in Möbeln, Geräten und Gebäuden, insbesondere als elektrischer Heizkörper und der unbeschichteten Zone (8) als Kommunikationsfenster zur Datenübertragung.

## Claims

1. Pane (100) having an electric heating layer (3), comprising at least:
- a pane (1) with a surface (III),
- at least one electric heating layer (3) that is applied at least on part of the surface (III) and includes at least one uncoated zone (8),
- at least two busbars (5.1, 5.2) provided for connection to a voltage source (14), which are connected to the electric heating layer (3) such that a current path (11) for a heating current is formed between the busbars (5.1, 5.2), and
- n separating lines (9.n), which electrically subdivide the electric heating layer (3) into m segments (10.m), and n is an integer ≥ 1 and m = n+1,
wherein the segments (10.m) are arranged in strip form around the uncoated zone (8) such that the current path (11) for the heating current is guided around the uncoated zone (8), and the width (b) of the segments (10.m) is equal and the sum of the widths (b) of the segments (10.m) is equal to the width (B) of the electric heating layer (3), wherein the width (B) of the electric heating layer (3) is determined without a width of the uncoated zone (8) in a respective line parallel to the busbars (5.1, 5.2) or along an equipotential line of the electric heating layer (3) with no uncoated zone (8).

2. Pane (100) according to claim 1, wherein the electric heating layer (3) has at least n = 3 separating lines (9.1,9.2,9.3) and preferably n = 7 to 25 separating lines (9.n).

3. Pane (100) according to claim 1 or claim 2, wherein the width d of the separating line (9.n) is from 30 µm to 200 µm and preferably from 70 µm to 140 µm.

4. Pane (100) according to one of claims 1 through 3, wherein the area of the uncoated zone (8) is from 0.5 dm² to 15 dm² and preferably from 2 dm² to 8 dm².

5. Pane (100) according to one of claims 1 through 4, wherein the busbar (5.1, 5.2) is implemented as fired printing paste, which preferably contains metallic particles, metal particles, and/or carbon particles and in particular silver particles and preferably has a specific resistance ρₐ from 0.8 µohm•cm to 7.0 µohm•cm and particularly preferably from 1.0 µohm•cm to 2.5 µohm•cm and/or has a maximum width from 4 mm to 30 mm, preferably from 4 mm to 20 mm, and particularly preferably from 10 mm to 20 mm.

6. Pane (100) according to one of claims 1 through 5, wherein at least two busbars (5) are arranged on the region of the electric heating layer (3) and/or the surface (III) of the pane (1) is areally bonded to a second pane (2) via a thermoplastic intermediate layer (4).

7. Pane (100) according to one of claims 1 through 6, wherein the pane (1) and/or the second pane (2) contains glass, preferably flat glass, float glass, quartz glass, borosilicate glass, soda lime glass, or polymers, preferably polyethylene, polypropylene, polycarbonate, polymethyl methacrylate, and/or mixtures thereof.

8. Pane (100) according to one of claims 1 through 7, wherein the electric heating layer (3) is a transparent, electrically conductive coating and/or has a sheet resistance from 0.4 ohm/square to 10 ohm/square and preferably from 0.5 ohm/square to 1 ohm/square and/or contains silver (Ag), indium tin oxide (ITO), fluorine-doped tin oxide (SnO₂:F), or aluminum-doped zinc oxide (ZnO:AI).

9. Method for producing a pane (100) having an electric heating layer, comprising at least:
(a) application of an electric heating layer (3) with at least one uncoated zone (8) on a surface (III) of a pane (1),
(b) application of at least two busbars (5.1, 5.2) provided for connection to a voltage source (14) and parallel to each other, which are connected to the electric heating layer (3) such that a current path (11) for a heating current is formed between the busbars (5.1, 5.2), and
(c) introduction of n separating lines (9.n), which electrically subdivide the electric heating layer (3) into m segments (10.m), where n is an integer ≥1 and m = n+1, wherein the segments (10.m) are arranged at least partially in strip form around the uncoated zone (8) such that the current path (11) for the heating current is guided around the uncoated zone (8) and the width b of all segments (10.m) is equal and the sum of the widths b of the segments is equal to the width B of the electric heating layer (3), wherein the width (B) of the electric heating layer (3) is determined without a width of the uncoated zone (8) in a respective line parallel to the busbars (5.1, 5.2) or along an equipotential line of the electric heating layer (3) with no uncoated zone (8).

10. Method according to claim 9, wherein the separating lines (9.n) are introduced by laser patterning.

11. Use of the pane (100) according to one of claims 1 through 8 in means of transportation for travel on land, in the air, or on water, in particular in motor vehicles, for example, as a windshield, rear window, side windows, and/or a roof pane as well as a functional individual piece, and as a built-in component in furniture, devices, and buildings, in particular as an electric heater and of the uncoated zone (8) as a communication window for data transmission.

## Revendications

1. Vitre (100) avec un revêtement chauffant électrique (3), comprenant au moins :
- une vitre (1) ayant une surface (III),
- au moins un revêtement chauffant électrique (3), qui est appliquée sur au moins une partie de la surface (III) et comprend au moins une zone sans revêtement (8),
- au moins deux conducteurs collectifs (5.1,5.2) conçus pour être raccordés à une source d'alimentation (14), qui sont reliés au revêtement chauffant électrique (3) de telle manière, qu'entre les conducteurs collectifs (5.1,5.2) un trajet de courant (11) pour un courant de chauffage est formé et,
- introduction de n lignes de séparation (9.n), qui subdivisent électriquement le revêtement chauffant électrique (3) en m segments (10.m) et n est un numéro entier ≥1 et m = n+1,
où les segments (10.m) sont disposées en forme de bandes autour de la zone sans revêtement (8), que le trajet de courant (11) pour le courant de chauffage est guidé autour de la zone sans revêtement (8) et la largeur (b) des segments (10.m) est égale et la somme de la largeur (b) des segments (10.m) est égale à la largeur (B) de le revêtement chauffant électrique (3), où une largeur (B) de le revêtement chauffant électrique (3) sans une largeur de la zones sans revêtement (8) est mesurée le long d'une ligne respective parallèle aux conducteurs collectifs (5.1, 5.2) ou le long d'une ligne équipotentielle de le revêtement chauffant (3) sans zones sans revêtement (8).

2. Vitre (100) selon la revendication 1, où le revêtement chauffant électrique (3) présente au moins n = 3 lignes de séparation (9.1,9.2,9.3) et de préférence de n = 7 à 25 lignes de séparation (9.n).

3. Vitre (100) selon la revendication 1 ou la revendication 2, où une largeur d de la ligne de séparation (9.n) est de 30 µm à 200 µm et de préférence de 70 µm et 140 µm.

4. Vitre (100) selon l'une des revendications 1 à 3, où la surface de la zone sans revêtement (8) est de 0,5 dm² à 15 dm² et de préférence de 2 dm² à 8 dm².

5. Vitre (100) selon l'une des revendications 1 à 4, où les conducteurs collectifs (5.1,5.2) sont formés comme pâte d'impression brûlée, qui contient de préférence des particules métalliques, des particules de métal et/ou des particules de carbone et en particulier des particules d'argent et présente de préférence une résistance spécifique ρₐ de 0,8 µOhm cm à 7,0 cm µOhm et de manière particulièrement préférée de 1,0 µOhm cm à 2,5 µOhm cm et/ou présente une largeur maximale de 4 mm à 30 mm, de préférence de 4 mm à 20 mm et de manière particulièrement préférée de 10 mm à 20 mm.

6. Vitre (100) selon une des revendications 1 à 5, où au moins deux conducteurs collectifs (5) sont disposés sur la région du revêtement chauffant électrique (3) et/ou la surface (III) de la vitre (1) est reliée sur toute sa surface avec une deuxième vitre (2) par le biais d'une couche intermédiaire thermoplastique (4).

7. Vitre (100) selon l'une des revendications 1 à 6, où, la vitre (1) et/ou de préférence la deuxième vitre (2) contient du verre plat, du verre flotté, du verre de quartz, du verre borosilicate, du verre sodocalcique ou des polymères, de préférence du polyéthylène, du polypropylène, du polycarbonate du polyméthacrylate de méthyle et/ou des mélanges de ceux-ci.

8. Vitre (100) selon l'une des revendications 1 à 7, où le revêtement chauffant électrique (3) est un revêtement transparent, conducteur d'électricité et/ou présente une résistance de surface de 0,4 ohm/carré à 10 Ohm/ carré et de préférence de 0,5 Ohm/carré à 1 Ohm/carré et/ou contient de l'argent (AG), de l'oxyde d'indium-étain (ITO), de l'oxyde d'étain dopé au fluor (SnO₂:F) ou de l'oxyde de zinc dopé a l'aluminium (ZnO:AI).

9. Procédure de fabrication d'une vitre (100) avec un revêtement chauffant électrique, comprenant au moins :
(a) l'application d'au moins un revêtement chauffant électrique (3) avec au moins une zone sans revêtement (8) sur une surface (III) d'une vitre (1),
(b) l'application d'au moins deux conducteurs collectifs (5.1,5.2) parallèles l'un à l'autre conçus pour être raccordés à une source d'alimentation (14) qui sont reliés au revêtement chauffant électrique (3) de telle manière, qu'entre les conducteurs collectifs (5.1,5.2) un trajet de courant (11) pour un courant de chauffage est formé et
(c) l'introduction de n divisions (9.n), qui divisent électriquement le revêtement chauffant électrique (3) en m segments (10.m), où n est un nombre entier >1, m = n+1, où les segments (10.m) sont disposées au moins partiellement en forme de bandes autour de la zone sans revêtement (8),de telle manière que le trajet de courant (11) pour le courant de chauffage est guidé autour de la zone sans revêtement (8) et la largeur (b) des segments (10.m) est égale et la somme de la largeur (b) des segments (10.m) est égale à la largeur (B) de le revêtement chauffant électrique (3), où une largeur (B) de le revêtement chauffant électrique (3) sans une largeur de la zones sans revêtement (8) est mesurée le long d'une ligne respective parallèle aux conducteurs collectifs (5.1, 5.2) ou le long d'une ligne équipotentielle du revêtement chauffant (3) sans zones sans revêtement (8).

10. Procédure selon la revendication 9, où les divisions (9.n) sont introduites par la structuration par laser.

11. Utilisation de la vitre (100) selon l'une des revendications 1 à 8 dans les moyens de transport pour la circulation sur la terre, dans l'air ou l'eau, en particulier dans les véhicules, par exemple, comme pare-brise, lunette arrière, vitre latérale ou vitre de toit, ainsi que comme pièce fonctionnelle et accessoire dans le mobilier, les équipements et les bâtiments, en particulier comme radiateur électrique et la zone sans revêtement (8) comme fenêtre de communication pour la transmission de données.
